# EUROPEAN PATENT APPLICATION

(11) **EP 3 068 127 A1**
(43) Date of publication of application: **14.09.2016**
(21) Application number: 16159604.4
(22) Date of filing: 10.03.2016
(51) Int. Cl.: H04N 5/225

(54) **CAM-PROTECTOR**

(30) Priority: 13.03.2015 US 201514656887
(71) Applicant: Terry Bobby, Canton, Massachusetts 02021 (US)
(72) Inventor: Terry Bobby, Canton, Massachusetts 02021 (US)
(74) Representative: Romano, Giuseppe

(57) **Abstract**

The present invention discloses a Webcam protector for laptops and computers comprising a CamProtector for covering the camera and a padding layer. The invention is designed so as to over the lid and fastened enough to cover the camera. The CamProtector is adjustable in nature to cover the webcam to prevent the hackers from spying in users and thus enhances the security; also protects the base of the computer from being damaged. The padding layer is made of gel, snuggle fits over the webcam and provided on either side to cushion the fragile screen as well.

## Description

### BACKGROUND OF THE INVENTION

### (1) Field of the invention.

The present invention generally relates to configurable covers that are designed to protect sensitive items from damage. Furthermore, the invention relates to a laptop computer with hardware security protection, and, more particularly, to a laptop computer with hardware security protection that is protected by a protector or cover on the laptop computer to shield the image capture module.

### (2) Background of Invention.

With the advancement of technology, both personal computers and networked multimedia transmission and processing technology have experienced rapid development. The camera has, therefore, become the most common PC video tool. The camera allows people to meet people in everyday life, facilitate learning, and network video chat or video conferencing, etc. Common laptops come with cameras that are usually bare. This has resulted in hackers having the ability to use video software illegally and without the knowledge of the parties. Hackers can start the camera and use it to view candid acts and violate the privacy of people. This could also open people up to the possibility of blackmail or fraud. Additionally, because the camera is in long-term exposure with air, dust tends to collect at the mirror, thus affecting the camera's image quality and life. Although there are a number of camera protection device to protect the camera, all of these protection devices require a laptop to be modified or remain in re-open mode, adding to the complex structure. This not only increases the laptop production processes, but also increases the cost of production, and further leading to affect the thickness of the laptop to a certain extent. Because the user purchased the laptop with a bare camera without a protection device, professionals are needed to add protection devices to the same, leading to increased cost and risk, as a minute mistake could lead to damages.

A conventional laptop computer is usually provided with a webcam. Generally speaking, the webcam is provided on the panel of the laptop computer. A user can operate the webcam to face him or her to capture images. It allows the user to take a video call, and the other side can see the images via network transmission.

However, there is not any protection to a webcam of the conventional laptop computer. Moreover, the switch of the webcam is controlled by software, and users cannot determine whether the switch is on or off according to the appearance. Therefore, personal or private images may be transmitted to another computer if the user neglects to switch off the webcam. It is a threat to privacy protection.

Moreover, spyware, such as Trojan Programs and Internet hackers, have become very popular in recent years. Since the switch of a webcam is still controlled by software, the invader can get control of the webcam if the webcam is attacked by a hacker or hidden spyware. Besides the threat to the personal or private images, trade secrets may be secretly stolen if the commercial laptop computer is attached during a videoconference.

On the other hand, webcams of some laptop computers are designed to be rotatable to facilitate capturing images. These webcams can rotate 180 degrees, and the lens captures images forward. Due to the design of the mechanism, the webcams can only rotate back and forth in a reciprocating mode within 180 degrees. Even the lens can rotate forth, up and down, to prevent images of the user self-revealing. Also, images of the usage environment, such as a conference room, an office, or a house may be revealed. Furthermore, users are not accustomed to turning away the lens, so this method is still not sufficient for security protection.

The prior art includes webcam lens blockers that allow the lens blocker device to slide over the top of the screen side of a laptop computer to achieve effective blocking of the webcam lens from intrusion. Many prior art lens blockers are made from hard plastic or other hard composite material, have fixed width or limited extensibility, and do not accommodate the range of screen-side thickness or thinness observable across the wide range of laptop models and brands.

Prior art lens blockers are also susceptible to sliding of off the webcam lens, unbeknown to the user, thereby failing to protect the user from unauthorized over-the-web intrusion or breaches of privacy.

Furthermore, due to the hard material used in prior art lens blockers, placement and removal of this lens blocker over time leaves abrasions that may damage webcam lens or leave unsightly marks on the back surface of the laptop cover.

Moreover, prior art lens blockers are uniform in appearance, and, therefore, do not satisfy user preference for personalization, customization, and group affinity that is highly valued by customers of consumer products.

The present invention is purposely designed to overcome above noted disadvantages in the prior art. Additional features and merits of the present invention, and benefits from use of the webcam lens blocker, will be more fully understood from the description of the drawings and preferred embodiments following and the drawings, which are described below.

### BRIEF SUMMARY OF THE INVENTION

A laptop computer with hardware security protection includes a host, a display, an image capture module, and a cover or a protector, according to the invention. The display is pivotally connected to the host, and it can display information from the host. The image capture module is disposed on the display to capture images, and the images are displayed on the display. The cover or protector is disposed at the display and near the image capture module, and it can slide between a closed position, where the cover or protector shields the image capture module, and an open position, where the cover or protector exposes the image capture module. Security protection is achieved by the cover or protector shielding the image capture module. It can be determined whether the image capture module is shielded or not according to the appearance. Therefore, image revealing because of users' neglect can be prevented.

The utility model provides a simple structure, easy installation, and protection devices capable of acting as a physical shielding device to open and close the laptop camera.

### BRIEF DESCRIPTION OF THE SEVERAL VIEWS OF THE DRAWINGS

To further clarify various aspects of some example embodiments of the present invention, a more particular description of the invention will be rendered by reference to specific embodiments thereof, which are illustrated in the appended drawing. It is appreciated that the drawing depicts only illustrated embodiments of the invention, and are, therefore, not to be considered limiting of its scope. The invention will be described and explained with additional specificity and detail through the use of the accompanying drawing, in which:
Figure 1 depicts a perspective view of an unprotected laptop.
Figure 2 depicts a laptop computer equipped with the CamProtector
Figure 3 depicts a front view of the CamProtector.

### DETAILED DESCRIPTION OF THE INVENTION

The terminology used herein is for the purpose of describing particular embodiments only, and is not intended to be limiting. As used herein, the singular forms "a", "an", and "the" are intended to include the plural forms as well, unless the context clearly indicates otherwise. It will be further understood that the terms "comprises" and/or "comprising" or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

For the sake of simplicity and to give the claims of this patent application the broadest interpretation and construction possible, the conjunctive "and" may also be taken to include the disjunctive "or," and vice versa, whenever necessary to give the claims of this patent application the broadest interpretation and construction possible. Likewise, when the plural form is used, it may be taken to include the singular form, and vice versa.

It will be understood that, although the terms first, second, third, etc. may be used herein to describe various elements, these elements should not be limited by these terms. These terms are only used to distinguish one element from another element.

The present invention provides a security device for a laptop computer or desktop displays. The display or the screen have openings for selectively installing a web camera module or a web camera cover module in the opening, such that if the web camera module is installed in the opening, the camera module will be electrically connected to the graphics controller and provide pixel data. The graphics controller will drive the display panel to display the pixel data. If the web camera cover module is installed in the opening, the cover module and the display housing will constitute an overall external look. In more particular embodiments, the camera lens element is configured to receive an object image and focus the object image upon a sensor of the camera module.

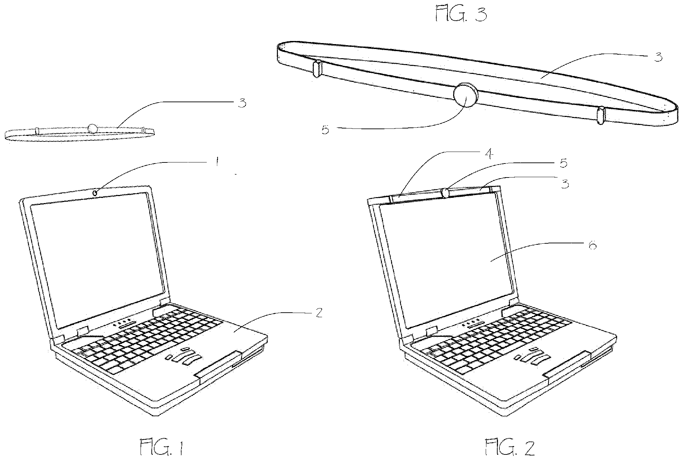

As shown in Figures 1 and 2, the present invention discloses a webcam 1 present in a laptop 2, wherein the webcam 1 is equipped with the CamProtector - a security device for a laptop computer or desktop displays- 3 to protect the user from unauthorized webcam access. Further, the laptop 2 top case 4 is protected by an additional layer of padding 5 to prevent impact and compression related damage to the fragile LCD screen 6. Furthermore, the CamProtector is designed to be fitted over the lid, fastened, and then cover the camera.

In Figure 3, the present invention discloses impact guards that consist of a layer of gel-padding S. More specifically, the gel pads on either side serve as cushions for the fragile screen when the computer or laptop is closed. This prevents screen damage during transportation, storage, and general use of laptop or computer.

The present invention is purposely designed to overcome disadvantages noted in the prior art. The present invention's clasping section enables the assembly to fit across the range of thickness and thinness observable in laptop computer screen sides. The lens blocker's clasping section prevents the assembly from inadvertently sliding off the webcam lens, thus achieving the primary objective of protecting the user from external breaches of privacy and from over-the-web viewing through their webcam by unauthorized persons.

In one embodiment of the present invention, the invention covers laptop webcams. This prevents hackers from spying on the user and compromising security, while simultaneously protecting the base of the computer from being damaged when the computer is closed.
In another preferred embodiment, the present invention blocks user from unwanted surveillance from hackers, viruses, and parties by protecting the webcam. Furthermore, the present invention is stretched over the top of the computer, and snugly fits over the webcam, covering it and protecting the LCS screen. An additional feature of the present invention is that it serves to protect the user's privacy, but also prevents screen from cracking.

In a preferred embodiment of the present invention, a user can browse the Internet and download files without fear of having their webcams compromised; wherein a user can also transport the laptop more safely and without risk of screen cracking. The present invention will be manufactured using rubber or silicon; wherein the invention will be present in variety of colors and sizes.

The present invention presents a trendy, affordable, inexpensive to manufacture, and easy solution to the disadvantages mentioned in the prior art.

Although specific embodiments have been illustrated and described herein, it will be appreciated by those of ordinary skill in the art that any arrangement that is calculated to achieve the same purpose may be substituted for the specific embodiment shown. This application is intended to cover any adaptations or variations of the present invention. Therefore, it is manifestly intended that this invention be limited only by the claims and the equivalents thereof.

Although the invention has been explained in relation to its preferred embodiment, it is to be understood that many other possible modifications and variations can be made without departing from the spirit and scope of the invention.

## Claims

1. A security webcam protector device for laptops and computers comprises:
(a) a CamProtector for covering camera; and
(b) a gel-padding layer

2. The security webcam protector device for laptops and computers of claim 1, wherein said CamProtector is designed to fit over the lid, fastened enough to cover the camera.

3. The security webcam protector device for laptops and computers of claim 1, wherein said CamProtector is adjustable to cover the webcam preventing hackers spying on the user.

4. The security webcam protector device for laptops and computers of claim 1, wherein said gel-padding layer protecting the base of the computer from damaging.

5. The security webcam protector device for laptops and computers of claim 1, wherein said gel-padding layer protecting the computer screen in closed position.

6. The security webcam protector device for laptops and computers of claim 1, wherein said gel-padding layer is stretched over the top of computer and snugly fits over the webcam, covering and protecting the LCS screen.

7. The security webcam protector device for laptops and computers of claim 1, wherein said CamProtector is available in smaller sizes for devices like mobile phones and tablet computers.
